# EUROPEAN PATENT APPLICATION

(11) **EP 1 384 879 A2**
(43) Date of publication of application: **28.01.2004**
(21) Application number: 03014614.6
(22) Date of filing: 26.06.2003
(51) Int. Cl.: F02D 41/40, F02D 41/04, F01N 3/023

(54) **Engine exhaust gas purification apparatus**

(30) Priority: 24.07.2002 JP 2002215400
(71) Applicant: Mazda Motor Corporation, Aki-gun, Hiroshima 735-8670 (JP)
(72) Inventor: Takami, Akihide, Aki-gun, Hiroshima 730-8670 (JP); Harada, Kouchiro, Aki-gun, Hiroshima 730-8670 (JP); Tsushio, Yoshinori, Aki-gun, Hiroshima 730-8670 (JP); Hayahibara, Hiroshi, Aki-gun, Hiroshima 730-8670 (JP); Ueoka, Toshitsugu, Aki-gun, Hiroshima 730-8670 (JP); Saito, Tomoaki, Aki-gun, Hiroshima 730-8670 (JP)
(74) Representative: Müller-Boré & Partner Patentanwälte

(57) **Abstract**

An oxidation catalyst (**12**) is disposed in an exhaust passage (**11**) positioned upstream of a DPF (**13**), the oxidation catalyst (**12**) is used to cause combustion of a post-injection fuel, and heat generated in the combustion is utilized to raise the temperature of the DPF (**13**), thereby combusting soot. When the temperature of the oxidation catalyst (**12**) is equal to or less than a predetermined temperature (**To**), the post-injection is restricted. Thereby, non-combusted fuel is prevented from reaching the DPF (**13**). This prevents the DPF (**13**) from cracking that can occur when non-combusted fuel is ignition-combusted in the DPF (**13**).

## Description

### BACKGROUND OF THE INVENTION

The present invention relates to an exhaust gas purification apparatus of a diesel engine, having DPFs (Diesel Particulate Filters) disposed in exhaust passages.

Regarding a diesel engine including a DPF disposed in an exhaust passage, Japanese Unexamined Patent Application Publication No. 2001-303980 discloses that when the amount of soot collected in a DPF is required to be reduced, the temperature of the DPF is increased and soot is then combusted. More specifically, a fuel injection valve is controlled to perform a main-injection of fuel at around the pressure-stroke top dead center of a cylinder, and a post-injection of the fuel is performed during the expansion stroke after the main-injection. Thereby, the fuel is fed to the DPF. In this case, the fuel is oxidized and reaction heat occurring in the reaction causes the DPF temperature rise, thereby burning off the soot.

The publication additionally describes that, before the post-injection, exhaust gas flow rate is reduced to cause a temperature rise of exhaust gas. The publication further describes as follows. When the temperature of the DPF is less than the level of a predetermined temperature, the engine increases the exhaust gas temperature by reducing the exhaust gas flow rate. On the other hand, when the temperature of the DPF has reached the level of the predetermined temperature, the fuel is fed by the post-injection.

However, although the post-injection is effective for increasing the DPF temperature, the fuel in injected in the post-injection reaches the DPF and deposited therein. In this case, when the DPF temperature rises, there is a possibility in that previously deposited fuel is abruptly combusted, thereby occurring cracking to the DPF. In particular, suppose the DPF is used that is a monolithic-honeycomb ceramic filter of a wall flow type in which entries and exits of honeycomb cells are alternately sealed. In this case, the deposited fuel is abruptly combusted, causing abrupt rises in, for example, combustion pressure and temperature, whereby the DPF is rendered prone to cracking.

### SUMMARY OF THE INVENTION

An object of the present invention is to solve a problem of cracking of a DPF (Diesel Particulate Filter) that can be caused by a post-injection.

Another object of the present invention is to quickly raise the temperature of the DPF when soot in the DPF is required to be reduced.

In order to achieve these objects, the present invention is made to prevent a post-injection fuel from reaching the DPF to be ignition-combusted.

More specifically, the present invention provides an engine exhaust gas purification apparatus including: a fuel injector (**5**) for feeding fuel to a combustion chamber (**4**) of a diesel engine (**1**); a diesel particulate filter ("DPF") (**13**) disposed in an exhaust passage (**11**) of the diesel engine (**1**) to collect soot in an exhaust gas; collection-amount detection means (**15, 16**) for detecting values regarding the amount of soot collected by the DPF (**13**); injection control means (**20**) for executing a post-injection so that the fuel injector (**5**) injects the fuel during the expansion stroke or the exhaust stroke after a main-injection so that the fuel injector (**5**) injects the fuel at or in the vicinity of a top dead center of the compression stroke in order to raise the temperature of DPF (**13**) when the amount of the collected soot is determined in accordance with detected values of the collection-amount detection means (**15, 16**) to be equal to or more than a predetermined value; and combustion means (**12**) that is disposed in an exhaust passage (**11**) positioned upstream of the DPF (**13**) and that causes the fuel fed by the fuel injector (**5**) to be combusted, wherein the engine exhaust gas purification apparatus further comprises temperature detection means (**14**) for detecting a value regarding the temperature of the combustion means (**12**), and wherein the injection control means (**20**) restricts the post-injection when the temperature of the combustion means (**12**) is determined in accordance with a detected value of the temperature detection means (**14**) to be equal to or less than a predetermined temperature (**To**).

Accordingly, the post-injection fuel is combusted through the combustion means (**12**), and the exhaust gas temperature is thereby raised at a position upstream of the DPF (**13**). Thereby, the temperature of the DPF (**13**) is raised, and soot collected in the DPF (**13**) is combusted. Consequently, regeneration of the DPF (**13**) (recovery of soot collecting capability) can be implemented. In addition, since the post-injection fuel can be prevented from being directly ignition-combusted in the DPF (**13**), it is possible to prevent the DPF (**13**) from occurring cracking.

In a case where the temperature of the combustion means (**12**) is low, the fuel is not oxidized and is fed to the DPF (**13**) even when the post-injection is executed. As such, there is a possibility in that the fuel is subsequently ignition-combusted, thereby occurring cracking of the DPF (**13**) and deterioration in fuel economy. In view of the problem, the present invention has a structure in that the post-injection is restricted when the temperature of the combustion means (**12**) is equal to or less than the predetermined temperature (**To**). The restriction includes prohibition of the post-injection and reduction in the post-injection quantity (the post-injection quantity is reduced to be smaller than that when the temperature of the combustion means (**12**) is higher than the predetermined temperature (**To**)).

In addition to the oxidation catalyst, fuel ignition means such as glow plugs, spark plugs or ceramic heat accumulators may be used as the combustion means (**12**).

In a case where the oxidation catalyst is used as the combustion means (**12**), the temperature detection means (**14**) detects a value regarding the temperature of the oxidation catalyst (**12**), and the injection control means (**20**) restricts the post-injection when the temperature of the oxidation catalyst (**12**) is determined in accordance with a detected value of the temperature detection means (**14**) to be equal to or less than the predetermined temperature (**To**) at which the oxidation catalyst (**12**) is activated.

In this case, the post-injection fuel is oxidized by the oxidation catalyst (**12**) and the exhaust gas temperature is raised by heat of reaction in the oxidation, whereby the temperature of the DPF (**13**) is raised. However, when the temperature of the oxidation catalyst (**12**) is low, that is, when the oxidation catalyst (**12**) does not yet have a temperature sufficient to exhibit the activation, even when the post-injection is executed, the fuel may probably be fed to the DPF (**13**) without being oxidized. As such, there is a possibility in that the fuel is subsequently ignition-combusted in the DPF (**13**), thereby occurring cracking of the DPF (**13**) and deterioration in fuel economy. In view of the problem, the present invention has a structure in that the post-injection is restricted when the temperature of the oxidation catalyst (**12**) is equal to or less than the activating temperature.

In the case where the oxidation catalyst is used as the combustion means (**12**), it is preferable that the injection control means (**20**) intermittently executes the post-injection when the temperature of the oxidation catalyst (**12**) is determined to be equal to or less than the predetermined temperature (**To**).

Specifically, in a case where the quantity of the post-injection fuel when soot collected in the DPF (**13**) is required to be reduced is large, all the fuel is not oxidized when the activation of the oxidation catalyst (**12**) is low, and the fuel is partly fed to the DPF (**13**). As such, there is a possibility in that the fuel is subsequently ignition-combusted in the DPF (**13**), thereby occurring cracking of the DPF (**13**) and deterioration in fuel economy. In addition, even in a case where the activation of the oxidation catalyst (**12**) is high, when the quantity of the post-injection fuel is large, the oxidation reaction abruptly occurs, and the temperature of the oxidation catalyst (**12**) is rapidly raised. As such, there is a possibility in that the catalyst is deteriorated. Accordingly, the post-injection quantity needs to be limited; particularly, when the activation of the oxidation catalyst (**12**) is low, the post-injection quantity needs to be reduced. However, there is limitation to reduce the fuel injection quantity at one time through the fuel injector (**5**).

In view of the problem, the present invention has a structure in that the post-injection is not always performed after the main-injection, but the post-injections are appropriately intermittently executed. For example, for a multi-cylinder engine in which main-injections are performed in an appropriate order into combustion chambers (**4**) of the respective cylinders, when two post-injections are performed subsequently to the main-injection, the post-injection is not performed in the subsequent main-injection. That is, one post-injection is waved after two post-injections are performed in series; or alternatively, one post-injection is not performed after three post-injections are performed in series. In this manner, when three or more main-injections need to be executed in a unit time, the number of post-injections may be reduced by a number smaller than the half thereof.

Preferably, the injection control means (**20**) retards timing of the main-injection when the temperature of the oxidation catalyst (**12**) is equal to or less than the predetermined temperature (**To**).

More specifically, because of the retard in the main-injection timing, the ratio at which the combustion energy of the main-injection fuel is converted into the kinetic energy is reduced, and the exhaust gas temperature is thereby raised. This enables accelerated activation of the oxidation catalyst (**12**) to be implemented.

In addition, preferably, the engine exhaust gas purification apparatus further includes: exhaust gas recirculation means (**18**) for adjusting an amount of exhaust gas recirculation to the combustion chamber (**4**); and exhaust gas recirculation control means (**20**) for reducing the amount of exhaust gas recirculation when the temperature of the oxidation catalyst (**12**) is equal to or less than that when the temperature of the oxidation catalyst (**12**) is higher than the predetermined temperature (**To**).

In this case, since the amount of exhaust gas recirculation is reduced, the exhaust heat can be effectively used to raise the temperature of the oxidation catalyst (**12**). In addition, since the amount of fresh air is relatively increased, the combustion temperature is raised, and the exhaust heat is thereby raised. Thereby, accelerated activation of the oxidation catalyst (**12**) can be implemented.

Preferably, the injection control means (**20**) executes the post-injection at a crank angle of 60 to 120 degrees after a top dead center of the compression stroke.

Thereby, the post-injection fuel can be fed to the oxidation catalyst (**12**) without being combusted in the combustion chamber (**4**), consequently making it advantageous for raising the temperature of the DPF (**13**) as well as for combusting soot therein. It is more preferable that the post-injection be executed at a crank angle of 80 to 100 degrees after a top dead center of the compression stroke.

Further, preferably, a post-injection quantity per combustion cycle in one cylinder is equal to or less than 10 mm³.

Thereby, a large amount of the post-injection fuel is not fed to the DPF (**13**), and cracking of the DPF (**13**) due to abrupt increase in temperature can be prevented. It is more preferable that the post-injection quantity is set to equal to or less than 6 mm³.

In the case where the oxidation catalyst is used as the combustion means (**12**), preferably, the injection control means (**20**) executes: a first post-injection so that the fuel is combusted before reaching the oxidation catalyst (**12**) in a case where the temperature of the oxidation catalyst (**12**) is equal to or less than the predetermined temperature (**To**); and a second post-injection so that the fuel is combusted in the oxidation catalyst (**12**) in a case where the temperature of the oxidation catalyst (**12**) is higher than the predetermined temperature (**To**).

Accordingly, by performing the first post-injection, the exhaust gas temperature is raised to enable the oxidation catalyst (**12**) to be heated to a temperature exceeding the predetermined temperature (**To**) and, thereafter, non-combusted fuel can be fed to the oxidation catalyst (**12**) so as to be oxidized by performing the second post-injection, and the temperature of the DPF (**13**) can be raised according to heat of the reaction in the oxidation.

### BRIEF DESCRIPTION OF THE DRAWINGS

Fig. **1** is an overall configuration view of a diesel-engine exhaust gas purification apparatus.
Fig. **2** is a flowchart of fuel injection and EGR control.
Fig. **3** is a time chart of the fuel injection and rates of heat generation.
Fig. **4** is a graph showing the relationship between the post-injection timing and a soot discharge amount.
Fig. **5** is a graph showing the relationship between the post-injection timing and an exhaust temperature.

### DETAILED DESCRIPTION OF THE INVENTION

Hereinafter, description will be given of a preferred embodiment of the present invention with reference to the drawings.

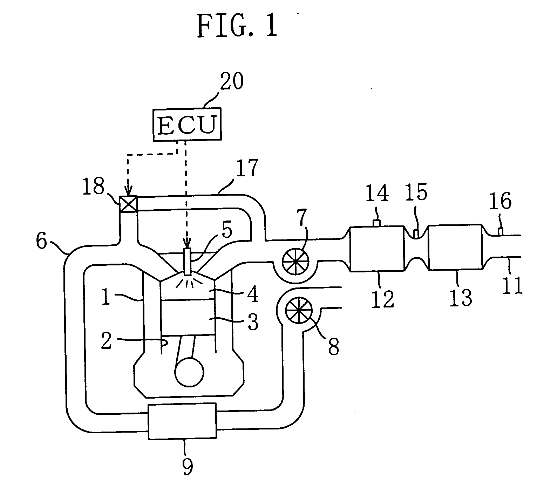

Fig. 1 shows an example of an engine exhaust gas purification apparatus according to the embodiment of the present invention, in which numeral **1** denotes a diesel engine equipped with a vehicle. The diesel engine **1** includes a plurality of cylinders **2**, **2**, ... (only one of which is shown). A piston **3** is inserted into each cylinder **2** to be reciprocatable, in which the piston **3** and a cylinder head partitively form a combustion chamber **4** in the cylinder **2**. An injector **5** (fuel injection valve) is disposed in a ceiling portion of the combustion chamber **4**, in which high pressure fuel is directly injected from a nozzle hole formed at an end portion of the injector **5** to the combustion chamber **4**.

An air intake passage **6** for supplying air (refreshed air) is connected to the combustion chamber **4** of each cylinder **2**. A blower **8** and an inter-cooler **9** are provided in the air intake passage **6**. The blower **8** is driven by a turbine **7** described below to compress intake gas compressed by the blower **8** and supplies the gas into the combustion chamber **4.** The inter-cooler **9** cools the intake gas compressed by the blower **8.**

In addition, the combustion chamber **4** of the cylinder **2** is connected to an exhaust passage **11** that emits combustion gas (exhaust gas). In the exhaust passage **11,** there are disposed the turbine **7**, which is rotated by exhaust gas flow, an oxidation catalyst **12**, and a diesel particulate filter **13** ("DPF") in the order from the upstream to downstream sides. The turbine **7** and the blower **8** together form a turbocharger.

The oxidation catalyst **12** acts for the oxidation of HC (non-combusted fuel component) and CO in the exhaust gas. The oxidation catalyst **12** is formed by coating noble metal based catalyst (for example, Pt and Pd are included to γ-alumina) on a honeycombed cordierite carrier, in which all cells of the carrier have two ends that are kept open. The DPF **13** is of a cordierite honeycombed wall flow type in which end surfaces of the respective cells constituting the filter are alternately sealed. In addition, oxidation catalyst is coated on the DPF **13**. It is noted that the carrier of the oxidation catalyst **12** and the DPF **13**, for example, may be formed using a silica or inorganic porous material instead of the cordierite material.

A temperature sensor **14** is provided to the oxidation catalyst **12** to detect the temperature thereof. Further, exhaust pressure sensors **15** and **16** are provided on the upstream and downstream sides of the DPF **13**.

An upstream end of an exhaust gas recirculation passage **17** (hereinafter, referred to as an "EGR passage") is connected to a portion of the exhaust passage **11**, the portion being positioned further upstream from the turbine **7.** A downstream end of the EGR passage **17** is connected to the air intake passage **6**, which is positioned downstream of the inter-cooler **9**. In this configuration, exhaust gas is partly returned to the air intake passage **6**. In addition, an exhaust gas recirculation amount adjusting valve **18** (hereinafter, referred to as an "EGR valve") is provided in the EGR passage **17.**

The injector **5** and the EGR valve **18** operate in response to a control signal transmitted from an electronic control unit **20** (hereinafter, referred to as an "ECU"). The ECU **20** receives output signals of various devices, such as the temperature sensor **14**, the exhaust pressure sensors **15** and **16**, a crank angle sensor for detecting the rotation angle of a crank shaft, an engine water temperature sensor for detecting the cooling water temperature, an intake pressure sensor for detecting the pressure state of intake air, an airflow sensor for detecting an engine intake air amount, an accelerator opening sensor for detecting the accelerator pedal depression amount (degree of the accelerator opening).

### (Control of Injector 5 and EGR Valve 18)

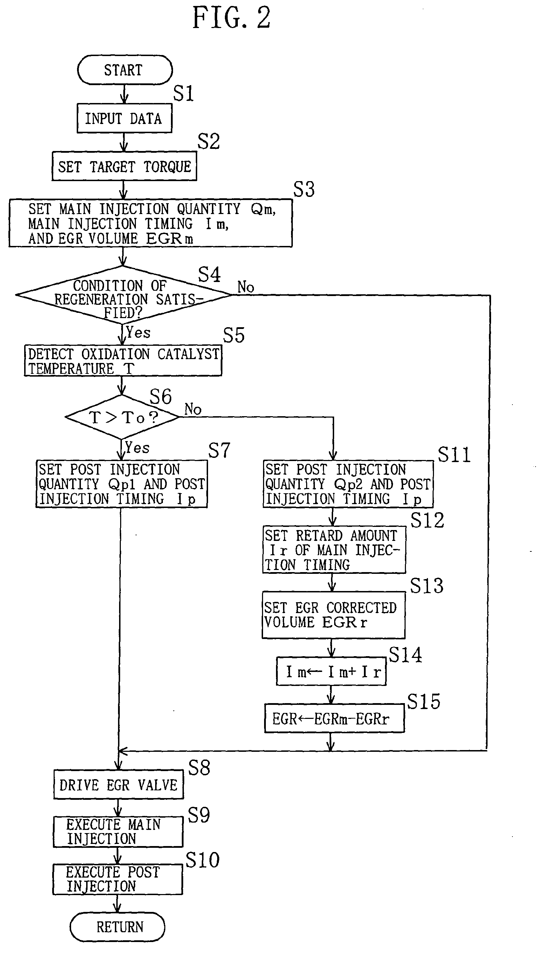

A procedure of control operation by the ECU **20** for the injector **5** and the EGR valve **7** will be described with reference to a flowchart shown in Fig. **2**. After the start, in step **S1** signals or the like are inputted from, for example, the crank angle sensor, the engine water temperature sensor, the intake pressure sensor, the airflow sensor, the accelerator opening sensor, the temperature sensor **14**, and exhaust pressure sensors **15** and **16** (data input). Subsequently, in step **S2,** a target torque **Tr** of the engine **1** is set in accordance with a torque map preset in accordance with the engine speed and the degree of the accelerator opening. The engine speed is obtained from a crank-angle signal and the torque map is electronically stored. The target torque **Tr** is determined to be higher as the degree of the accelerator opening increases or the engine speed increases.

Subsequently, in step **S3,** in accordance with the target torque **Tr** and the engine speed, a main-injection quantity **Qm** is set, and a main-injection timing **Im** is set. In addition, an EGR volume **EGRm** (EGR percentage) is set in accordance with the engine speed and the main-injection quantity **Qm.** The main-injection quantity **Qm,** main-injection timing **Im**, and an EGR volume **EGRm** are set in accordance with individual maps that are preset and electronically stored. The main-injection quantity **Qm** is determined to be higher as the target torque **Tr** increases or the engine speed increases. The EGR volume **EGRm** is determined to be higher as the engine speed increases or injection quantity of the fuel increases. The main-injection timing **Im** is determined in consideration that the fuel-spray ignition delay time is different when a factor, such as engine water temperature or engine speed is different.

Subsequently, in step **S4**, it is determined whether a condition of regeneration of the DPF **13** is satisfied. Specifically, it is determined whether soot collected in the DPF **13** needs to be reduced. The condition is satisfied when the difference between the exhaust pressures on the upstream and downstream sides of the DPF **13** is equal to or more than a predetermined value according to the exhaust pressure sensors **15** and **16**, and concurrently, the engine load is equal to or more than a predetermined value (or, the engine speed is equal to or more than a predetermined value).

When the differential pressure is equal to or more than the predetermined value, the wall flow of the exhaust gas is deteriorated. Specifically, the deterioration of exhaust gas flow represents the increase in the amount of soot collected in the DPF **13**, so that the soot needs to be combusted. The engine operation state is used as the condition of regeneration for the reason that unless otherwise the exhaust gas temperature is high to some degree, soot in the DPF **13** does not burn efficiently. As such, the DPF **13** is not regenerated in an idle operation mode of engine.

In the subsequent step **S5**, a temperature **T** of the oxidation catalyst **12** is detected in accordance with an output of the temperature sensor **14**. In this case, the temperature **T** may be predicted from the engine operation state. Subsequently, in step **S6**, it is determined whether the temperature **T** of the oxidation catalyst **12** is higher than a predetermined temperature **To**. The predetermined temperature **To** is set in correspondence with a temperature (for example, about 200°C) at which the oxidation catalyst **12** exhibits relatively high activity.

In step **S6,** when the temperature **T** of the oxidation catalyst **12** is determined higher than the predetermined temperature **To**, the process proceeds to step **S7** and sets therein post-injection quantity **Qp1** of the fuel and a post-injection timing **Ip.** In order to raise the temperature of the DPF **13**, the post-injection is performed to feed non-combusted HC (fuel) to the oxidation catalyst **12** for oxidation thereof and to obtain the heat of reaction. For this reason, the post-injection timing **Ip** is set to 60 to 120°CA (crank angle) (preferably, 80 to 100°CA) after a top dead center of the compression stroke so that post-injection fuel is not combusted in the combustion chamber. The post-injection quantity **Qp1** per combustion cycle in one cylinder is set to equal to or less than 10 mm³, and further to equal to or less than 6 mm³.

In the subsequent step **S8,** the EGR valve **18** is driven to attain the **EGR** volume **EGRm** (EGR percentage) that has been set in step **S3.** Then, in step **S9,** a main-injection is executed following the main-injection quantity **Qm** and the main-injection timing **Im** that have been set in step **S3.** Further, in step **S10,** a post-injection of the fuel is executed in accordance with the post-injection quantity **Qp1** and the post-injection timing **Ip** that have been set in step **S7**. The post-injection is not subsequently performed when the post-injection after four main-injections have been executed in series. That is, the post-injections are intermittently executed with one unexecution every four series executions. Of course, the arrangement may be made such that the post-injection is always executed after the main-injection; that is, the post-injection is executed at all times with respect to the cylinder.

In step **S6**, when the temperature **T** of the oxidation catalyst **12** is determined equal to or less than the predetermined temperature **To,** the process proceeds to step **S11** and sets therein a post-injection quantity **Qp2** of the fuel and a post-injection timing **Ip.** The post-injection quantity **Qp2** in this case is determined to be less than post-injection quantity **Qp1 (Qp2 < Qp1),** which is applied when the temperature **T** is higher than the predetermined temperature To. In addition, in step **S12,** a retard amount **Ir** of the main-injection timing is set; at the subsequent step **S13,** an EGR compensation volume **EGRr** is set. Subsequently, in step **S14,** a main-injection timing **Im** is obtained by adding the retard amount Ir to the main-injection timing **Im** that has been set in step **S3** and is fed into the system; and at the subsequent step **S15,** an **EGR** volume **EGR** obtained by subtracting the EGR compensation volume **EGRr** from the EGR volume **EGRm** is fed into the system.

Subsequently, the EGR valve **18** is driven to attain the **EGR** volume EGR (EGR percentage) that has been set in step **S15;** then, a main-injection is executed in accordance with the main-injection quantity **Qm** set in step **S3** and the main-injection timing **Im** set in step **S14**; and further, a post-injection of the fuel is executed in accordance with the post-injection quantity **Qp2** and the post-injection timing **Ip** set in step **S11** (steps **S8** to **S10).**

When the condition of regeneration of the DPF **13** is determined not to be satisfied in step **S4,** the EGR valve **18** is driven and a main-injection of the fuel and a post-injection of the fuel are executed in accordance with the main-injection quantity **Qm,** the main-injection timing **Im,** and the EGR volume **EGRm** that have been set in step **S3** (steps **S8** to **S10**).

As such, when the condition of regeneration of the DPF **13** is not satisfied (when the amount of collected soot is yet small or the engine load is lower than a predetermined value (or when the engine speed is lower than a predetermined value)), the main-injection of the fuel and EGR are executed corresponding to the required engine operation condition. In addition, when the condition of regeneration of the DPF **13** is satisfied, the post-injection of the fuel is executed.

Even when the condition of regeneration of the DPF **13** is satisfied, when the temperature of the oxidation catalyst **12** is low (exhibition level of activation is low), the post-injection quantity of the fuel is reduced, the main-injection timing is retarded, and the EGR volume is also reduced (step **S6** → **S11** to **S15**).

More specifically, the post-injection quantity is reduced to prevent the DPF **13** from cracking that can be caused in such a way that the fuel injected in the post-injection is fed to the DPF **13** without being oxidized by the oxidation catalyst 12, and fuel deposited in the DPF **13** is thereafter burned in ignition combustion. In addition, the post-injection quantity is reduced to avoid deterioration in fuel economy. In this case, activation is accelerated in the oxidation catalyst **12** with the progress of the oxidation reaction of a small amount of the fuel fed by the post-injection. However, in a state where temperature is low and the oxidation catalyst **12** does not act substantially as a catalyst at the low temperature, the oxidation reaction of the fuel does not take place even when the post-injection is executed. As such, the arrangement may be made such that the post-injection is inhibited (**Qp1** = 0) upon detection of such the low temperature state.

The retard of the main-injection timing is set to increase the exhaust gas temperature and to thereby accelerate the activation of the oxidation catalyst **12** for the regeneration of the DPF **13**. The EGR volume is reduced to effectively use the exhaust heat to raise the temperature of DPF **13**. Concurrently, the EGR volume is reduced to increase the amount of fresh air to raise the combustion temperature, that is, to raise the exhaust gas temperature, thereby implementing accelerated activation of the DPF **13**.

When the temperature of the oxidation catalyst **12** is raised enough to sufficiently exhibit activation, the post-injection quantity is increased (step **S6** → **S7**). Thereby, the oxidation reaction of the fuel in the oxidation catalyst **12** is activated, and the temperature of DPF **13** can be raised by heat of the reaction to enable soot collected in the DPF **13** to be combusted (removed). Consequently, the DPF **13** can be regenerated.

As described above, the oxidation catalyst **12** is disposed in the exhaust passage at the location further upstream from the DPF **13** to prevent the post-injection fuel from being fed to the DPF **13.** As such, the problem of causing the post-injection fuel to be deposited in the DPF **13** can be solved, and cracking of the DPF **13** can be prevented. In this configuration, the cordierite honeycomb carrier is used for the oxidation catalyst **12** similarly to the case of the DPF **13**. However, dissimilar to the case of the DPF **13**, since two ends of the cell are kept open, while abrupt combustion of fuel can occur in the oxidation catalyst **12**, the combustion pressure does not greatly increase, consequently enabling cracking of the oxidation catalyst **12** to be prevented.

In addition, as in the embodiment described above, with the oxidation catalyst **12** being provided further upstream from DPF **13**, NO in the exhaust gas is oxidized to NO₂ in the oxidation catalyst **12**, and soot collected in the DPF **13** can be combusted with NO₂. The soot is combusted with NO₂ at 250 to 300°C. Accordingly, after the temperature of the DPF **13** is raised by the heat of the reaction of the oxidation catalyst **12**, the regeneration of the DPF **13** can be implemented without increasing the post-injection quantity, thereby making it advantageous in the improvement of the fuel economy.

According to the embodiment, although the post-injection is executed to cause the oxidation reaction of the fuel in the oxidation catalyst **12**, a separate post-injection may be executed to raise the exhaust gas temperature and to reduce soot. More specifically, when the temperature **T** of the oxidation catalyst **12** is equal to or less than the predetermined temperature **To**, the first post-injection is executed to raise the exhaust gas temperature and to reduce soot; and when the temperature **T** is equal to or more than the predetermined temperature **To**, the second post-injection according to the above-described step **S7** is executed. The operation may be arranged such that when the temperature **T** of the oxidation catalyst **12** is equal to or less than the predetermined temperature **To,** the first post-injection is executed to increase the exhaust gas temperature and to reduce soot, and the second post-injection according to the above-described step **S11** is executed.

Hereinafter, the first post-injection will be described. Timing of the first post-injection is set such that when a heat generation rate in the main-combustion (combustion of the main-injection fuel) has become equal to or less than a predetermined value, combustion of the post-injection fuel is commenced.

Generally, a soot generation mechanism in a diesel engine is considered such that primary particulates are generated by thermal decomposition of an over-rich air/fuel mixture locally formed in a cylinder, polymerization and condensation thereof are repeated, nuclei of soot are thereby created, and they grow and coalesce with each other in a high temperature atmosphere. Thereby, the so-called soot is formed. The growth and condensation as described above are considered to continue until diffusion combustion of the fuel is about to terminate, that is, until the heat generation rate becomes substantially zero.

As such, when the heat generation rate in the main-combustion has become equal to or less than a predetermined value, combustion of the first post-injection fuel is commenced, and re-combustion of soot generated in the above-described diffusion combustion is accelerated to thereby reduce the soot volume. For example, the post-injection timing may be set in the following manner. The combustion of the first post-injection fuel is commenced at a point of time when the heat generation rate in the main-combustion has become substantially zero or within a predetermined period of time close to the point of time when the heat generation rate becomes substantially zero (within a period of time from 5°CA before the point of time to 10°CA after the point of time, particularly within a range of about ±5° or a range of about ±3° in crank angle with respect to the point of time when the heat generation rate become substantially zero as the center).

Further, when the combustion of the first post-injection fuel commences at the point of time when the heat generation rate has become substantially zero or within the predetermined period of time close to that point of time, the exhaust gas temperature is raised thereby. Accordingly, an advantage can be obtained for the accelerated activation of the oxidation catalyst **12**.

The point of time when the heat generation rate in the main-combustion has become substantially zero is variable depending on, for example, the main-injection commence time, the main-injection quantity, the mode of injection (whether the fuel is collectively injected or split-injected), and the last injection timing in split injection. In addition, even when the first post-injection is executed, ignition does not occur instantaneously, but occurs with a delay. Further, a drive delay takes place for a time before the injector **5** actually opens after a drive signal therefor has been outputted.

As such, the post-injection timing is determined in such a manner as described. Experiments are conducted to preliminarily obtain points of time when the heat generation rate in the main-combustion has become substantially zero in individual engine operation modes and, in addition thereto, the ignition delay and the drive delay are taken into account. Then, post-injection timings are each determined so that combustion of the post-injection fuel commences when the heat generation rate has become a equal to or less than a predetermined value, or at the point of time when the heat generation rate has become substantially zero, or within a predetermined period of time close to the point of time. Data of the timings thus determined may be mapped and electronically stored corresponding to the engine operation modes, whereby the injection timing can be set corresponding to the engine operation mode in accordance with the mapped data.

The point of time when the heat generation rate in the main-combustion becomes substantially zero can be obtained in the following manner. Intra-cylinder pressure data in units of each crank angle in each of the engine operation modes is obtained by conducting experiments, the heat generation rate is thermodynamically calculated in accordance with the pressure data, and the result is represented in the form of a graph.

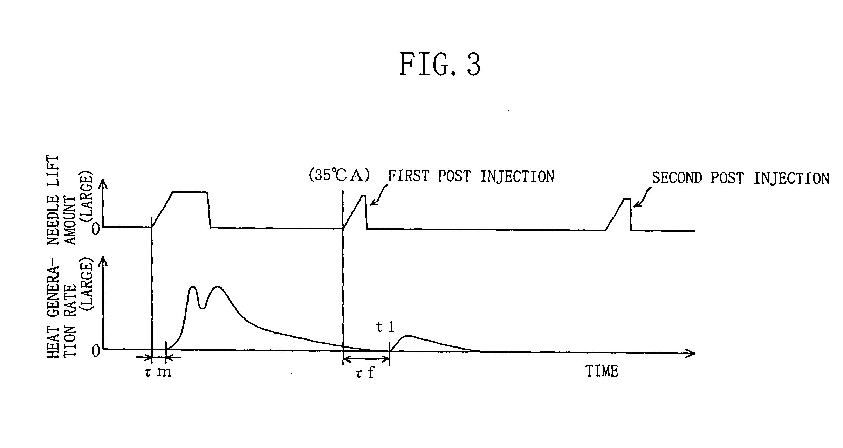

The heat generation rate thus obtained is illustrated in Fig. **3**. As shown in the figure, after commencing the main-injection of the fuel, ignition combustion is commenced with an ignition delay time τm being elapsed and, after the heat generation rate indicates a large value in a positive direction, the heat generation rate becomes zero (0) in accordance with the completion of the diffusion combustion. As such, the post-injection timing is obtained on the basis of a point of time **t1** (time point) when the rate of heat generation becomes approximately zero. Shown in Fig. **3** is in an intermediate-speed/intermediate-load operation mode of the engine (engine speed Ne: 2000 rpm, mean effective pressure **Pe**: 0.57 Mpa).

An ignition delay τ**f** of the post-injection fuel is variable depending on, for example, the engine displacement and fuel injection pressure. However, in an engine in a class with a displacement of 1 to 3L, the ignition delay τ**f** is ranged from 0.4 to 0.7 ms when the fuel injection pressure is ranged from 50 to 200 Mpa.

According to experiments, in the intermediate-speed/intermediate-load operation mode, when the post-injection timing was at a 35°CA (crank angle) ATDC, the post-injection fuel was ignition-combusted at the point of time when the heat generation rate in the main-combustion became approximately zero. The ignition delay **τf** of the post-injection fuel is about 0.5 ms.

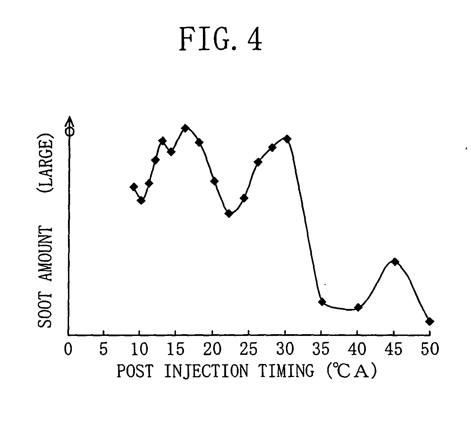

Experiments were conducted to measure soot discharge amounts after main-injections by variously changing the post-injection timing for the fuel in the above-described intermediate-speed/intermediate-load mode. The first post-injection quantity was set to one sixth of the main-injection quantity. In the measurement, the EGR percentage was adjusted to cause a NOx discharge amount to be 120 ppm. The results are shown in Fig. **4**. The results verified that the soot discharge amount is significantly reduced when the post-injection timing is set to a range of from 35°CA to 40°CA ATDC in a compression stroke. In the figure, a void circle put on the portion where the post-injection timing is 0°CA represents a case where the post-injection quantity is zero.

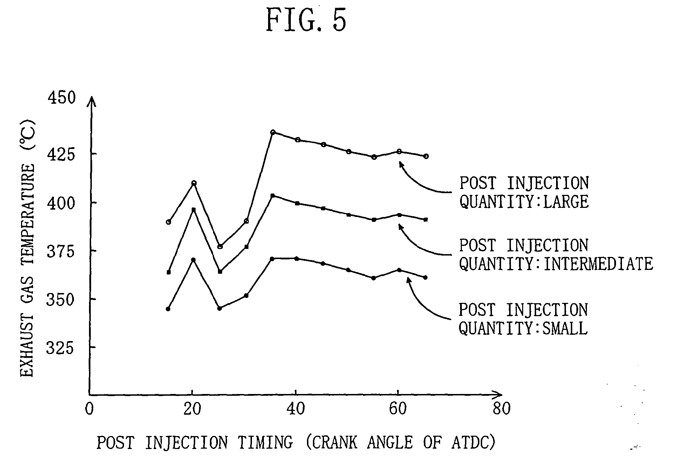

Further, during diesel combustion in the intermediate-speed/intermediate-load mode of the above-described engine, experiments were conducted to measure the exhaust gas temperature by variously changing the post-injection timing and the post-injection quantity. As a result, as shown in Fig. **5**, the exhaust gas temperature increases to be highest when the post-injection timing was set to about 35°CA ATDC at which the heat generation rate in the main-combustion becomes approximately zero. In addition, it was known that as the post-injection timing is retarded to be later than 35°CA ATDC, the exhaust gas temperature slowly decreases. Also known was that the exhaust gas temperature becomes higher as the post-injection quantity is larger.

The configuration may be arranged to include combustion-state determining means that determines the state of the above-described diffusive combustion in accordance to a signal, such as a detection signal of a temperature sensor for detecting the temperature in the combustion chamber **4**, a detection signal of a combustion light sensor, or a detection signal of a sensor that detects the quantities of, for example, hydrogen and hydrocarbon existing in the combustion chamber **4** and having biased electric charges and high reactivity. In the combustion-state determining means, a determination is made whether, for example, after a main-injection, the temperature is lower than a predetermined temperature, combustion light is not emitted, or the quantities of hydrogen, hydrocarbon, and the like are abruptly decreased. Thereby, a point of time when the heat generation rate in the main-combustion has become substantially zero is obtained, and the post-injection timing for a subsequent combustion cycle is set in accordance with the obtained point of time. Further, the arrangement may be made such that a differential value of a value obtained by subtracting an adiabatic expansion temperature from an intra-cylinder temperature detected by a temperature sensor is found and a point of time when the differential value becomes zero from a minus value is detected, thereby determining a point of time when the heat generation rate in the diffusion combustion becomes zero.

According to the embodiment, the deposition amount of soot in the DPF **13** is detected in accordance with the difference of pressures in the front and rear portions of the DPF **13**. However, since the soot generation amount is dependent on the engine operation mode, the deposition amount of soot in the DPF **13** may be obtained from an engine operation history.

The embodiment uses the oxidation catalyst **12** as combustion means that causes the post-injection fuel (second post-injection fuel) to be ignition-combusted before reaching the DPF **13**. However, in a configuration using glow plugs, spark plugs, or ceramic heat accumulators are used, when the temperatures thereof are low or when the exhaust gas temperature is low and the ignitionability is therefore low, the post-injection is inhibited.

The value regarding the temperature of the oxidation catalyst (combustion means) **12**, the temperature of the catalyst itself or the catalyst container is detected by the temperature detection sensor **14** and employed, as described above. Alternatively, the exhaust gas temperature at, for example, an entry of the catalyst or the exhaust gas temperature at an exit of the catalyst may be detected and employed.

## Claims

1. An engine exhaust gas purification apparatus comprising:
a fuel injector (**5**) for feeding fuel to a combustion chamber (**4**) of a diesel engine (**1**);
a diesel particulate filter ("DPF") (**13**) disposed in an exhaust passage (**11**) of the diesel engine (**1**) to collect soot in an exhaust gas;
collection-amount detection means (**15, 16**) for detecting values regarding the amount of soot collected by the DPF (**13**);
injection control means (**20**) for executing a post-injection so that the fuel injector (**5**) injects the fuel during the expansion stroke or the exhaust stroke after a main-injection so that the fuel injector (**5**) injects the fuel at or in the vicinity of a top dead center of the compression stroke in order to raise the temperature of DPF (**13**) when the amount of the collected soot is determined in accordance with detected values of the collection-amount detection means (**15, 16**) to be equal to or more than a predetermined value; and
combustion means (**12**) that is disposed in an exhaust passage (**11**) positioned upstream of the DPF (**13**) and that causes the fuel fed by the fuel injector (**5**) to be combusted,
wherein the engine exhaust gas purification apparatus further comprises temperature detection means (**14**) for detecting a value regarding the temperature of the combustion means (**12**), and
wherein the injection control means (**20**) restricts the post-injection when the temperature of the combustion means (**12**) is determined in accordance with a detected value of the temperature detection means (**14**) to be equal to or less than a predetermined temperature (**To**).

2. The engine exhaust gas purification apparatus according to Claim 1,
wherein the combustion means (**12**) is an oxidation catalyst,
wherein the temperature detection means (**14**) detects a value regarding the temperature of the oxidation catalyst (**12**), and
wherein the injection control means (**20**) restricts the post-injection when the temperature of the oxidation catalyst (**12**) is determined in accordance with a detected value of the temperature detection means (**14**) to be equal to or less than the predetermined temperature (**To**) at which the oxidation catalyst (**12**) is activated.

3. The engine exhaust gas purification apparatus according to Claim 2,
wherein the injection control means (**20**) intermittently executes the post-injection when the temperature of the oxidation catalyst (**12**) is determined to be equal to or less than the predetermined temperature (**To**).

4. The engine exhaust gas purification apparatus according to Claim 2,
wherein the injection control means (**20**) retards timing of the main-injection when the temperature of the oxidation catalyst (**12**) is equal to or less than the predetermined temperature (**To**).

5. The engine exhaust gas purification apparatus according to Claim 2, further comprising:
exhaust gas recirculation means (**18**) for adjusting an amount of exhaust gas recirculation to the combustion chamber (**4**); and
exhaust gas recirculation control means (**20**) for reducing the amount of exhaust gas recirculation when the temperature of the oxidation catalyst (**12**) is equal to or less than that when the temperature of the oxidation catalyst (**12**) is higher than the predetermined temperature (**To**).

6. The engine exhaust gas purification apparatus according to any of Claims 1 to 5,
wherein the injection control means (**20**) executes the post-injection at a crank angle of 60 to 120 degrees after a top dead center of the compression stroke.

7. The engine exhaust gas purification apparatus according to any of Claims 1 to 6,
wherein a post-injection quantity per combustion cycle in one cylinder is equal to or less than 10 mm³.

8. The engine exhaust gas purification apparatus according to any of Claims 2 to 7,
wherein the injection control means (**20**) executes:
a first post-injection so that the fuel is combusted before reaching the oxidation catalyst (**12**) in a case where the temperature of the oxidation catalyst (**12**) is equal to or less than the predetermined temperature (**To**); and
a second post-injection so that the fuel is combusted in the oxidation catalyst (**12**) in a case where the temperature of the oxidation catalyst (**12**) is higher than the predetermined temperature (**To**).
